Europäisches Patentamt

European Patent Office

Office européen des brevets

(19)

(11) Veröffentlichungsnummer : **0 133 939**
**B1**

(12) **EUROPÄISCHE PATENTSCHRIFT**

(45) Veröffentlichungstag der Patentschrift :
03.12.86

(21) Anmeldenummer : 84108455.1

(22) Anmeldetag : 18.07.84

(51) Int. Cl.⁴ : **C 25 B 11/03**, C 25 B 3/02, C 08 G 73/06

(54) Verfahren zur elektrochemischen Polymerisation von Pyrrolen, Anode zur Durchführung dieses Verfahrens sowie nach diesem Verfahren erhaltene Produkte.

(30) Priorität : 27.07.83 DE 3327012

(43) Veröffentlichungstag der Anmeldung :
13.03.85 Patentblatt 85/11

(45) Bekanntmachung des Hinweises auf die Patenterteilung : 03.12.86 Patentblatt 86/49

(84) Benannte Vertragsstaaten :
BE DE FR GB NL

(56) Entgegenhaltungen :
DE-A- 2 017 702
DE-A- 3 049 551
GB-A- 1 205 438
US-A- 3 448 020
US-A- 3 574 072
US-A- 3 708 416
JOURNAL OF THE ELECTROCHEMICAL SOCIETY, Band 129, Nr. 8, August 1982, Seiten 1685-1689, Manchester, New Hampshire, USA; J. PREJZA et al.: "Electropolymerization of pyrrole in the presence of fluoborate"

(73) Patentinhaber : BASF Aktiengesellschaft
Carl-Bosch-Strasse 38
D-6700 Ludwigshafen (DE)

(72) Erfinder : Naarmann, Herbert, Dr. Dipl.-Chem.
Haardtblick 15
D-6719 Wattenheim (DE)

**Beschreibung**

Die Erfindung betrifft ein Verfahren zur elektrochemischen Polymerisation von Pyrrolen oder Mischungen von Pyrrolen mit Comonomeren durch anodische Oxidation der Monomeren bzw. Monomer-Mischungen in einem Elektrolyt-Lösungsmittel in Gegenwart von Leitsalzen unter Abscheiden der Pyrrol-Polymeren auf der Anode. Die Erfindung betrifft des weiteren eine flächenförmige Anode zur Durchführung dieses Verfahrens sowie die nach diesem Verfahren erhaltenen Pyrrol-Polymeren.

Die elektrochemische Polymerisation von Pyrrol, gegebenenfalls in Mischung mit Comonomeren, ist bekannt (vgl. u. a. J. C. S. Chem. Comm. 1979, Seiten 635 und 854 ; US-PS 3 574 072 und DE-A-30 49 551). Hierbei werden Pyrrol bzw. die Pyrrol/Comonomer-Mischungen in einem in aller Regel organischen Elektrolyt-Lösungsmittel in Gegenwart von Leitsalzen elektrolysiert, wobei sich durch anodische Oxidation die Pyrrol-Polymeren bilden und an der Anode abscheiden. Die Leitsalze, beispielsweise die Alkalimetall-, Ammonium- oder Phosphonium-Salze mit Anionen aus der Gruppe $BF_4^-$, $AsF_6^-$, $SbF_6^-$, $PF_6^-$, $SbCl_6^-$, $ClO_4^-$, $HSO_4^-$ oder $SO_4^{2-}$, werden hierbei zumindest teilweise in die Pyrrol-Polymeren — wahrscheinlich in komplex gebundener Form — eingelagert und verleihen den so hergestellten Pyrrol-Polymeren eine hohe elektrische Leitfähigkeit bis zu etwa $10^2 \, Ohm^{-1} \, cm^{-1}$.

Bei Einsatz von flächenförmigen Anoden erhält man Filme der Pyrrol-Polymeren, die sich bei hinreichender Stärke beispielsweise über 20 μm Dicke, als selbsttragende Filme von der Anode abziehen lassen. Als Anodenmaterial dienen dabei insbesondere Edelstähle, Nickel, Titan oder Edelmetalle, wie vorzugsweise Platin oder Palladium. Es ist auch schon vorgeschlagen worden, andere elektrisch leitende Substanzen als Anodenmaterial bei der elektrochemischen Polymerisation von Pyrrolen zu verwenden, z. B. elektrisch leitfähige Kunststoff-Folien oder -Filme. Hierbei erhält man z. T. Verbundmaterialien, bei denen die anodisch erzeugten und abgeschiedenen, elektrisch leitenden Pyrrol-Polymeren fest auf dem als Anodenmaterial verwendeten elektrisch leitfähigen Substrat haften. Derartige Verbundmaterialien bestehen somit aus zwei oder mehreren elektrisch leitfähigen Schichten mit differenzierten Eigenschaften.

Polypyrrole haben in jüngster Zeit wegen ihrer hohen elektrischen Leitfähigkeit, guten Sauerstoff- und Temperaturbeständigkeit sowie ihrer sonstigen allgemeinen chemischen und physikalischen Eigenschaften reges Interesse für viele Anwendungszwecke gefunden, z. B. in elektrischen Schaltern, Halbleiter-Bauteilen, elektrochemischen Speicherelementen, als Elektroden, Abschirmmaterialien oder zur antistatischen Ausrüstung von Kunststoffen. Für die verschiedenen Anwendungsgebiete besteht ein Bedarf an vielgestaltigen, verbesserten und/oder modifizierten Pyrrol-Polymeren.

Es wurde bereits vorgeschlagen, die mechanischen Eigenschaften der Pyrrol-Polymeren durch Auswahl der bei ihrer Herstellung verwendeten Leitsalze zu variieren. Des weiteren wurde vorgeschlagen, Pyrrol-Polymere durch Einbau verschiedener Comonomere zu modifizieren bzw. unter Anwendung von Temperatur und Druck auf elektrisch nicht leitende Trägermaterialien, wie z. B. Kunststoff-Folien oder -Filme, unter Bildung von Mehrschichtenelementen aufzupressen.

Aufgabe der vorliegenden Erfindung war es, weitere modifizierte, elektrisch hochleitfähige Pyrrol-Polymere mit guten physikalischen, insbesondere mechanischen Eigenschaften zu schaffen und insbesondere ein Verfahren zu ihrer Herstellung und Mittel zur Durchführung dieses Verfahrens aufzuzeigen, welche einfach und leicht die Herstellung von modifizierten, elektrisch hochleitfähigen Pyrrol-Polymeren der genannten Art bei großer Variationsbreite ermöglichen.

Diese Aufgabe wird erfindungsgemäß dadurch gelöst, daß man bei der elektrochemischen Polymerisation von Pyrrolen oder Pyrrol/Comonomer-Mischungen als Anode einem mit dem Elektrolyten tränkbaren elektrisch nicht leitenden porösen Trägermaterial in Form eines Flächenelementes einsetzt, das über mindestens einen elektrisch leitenden Halte- und Kontakstreifen mit der Stromzuleitung für die Anode verbunden ist.

Gegenstand der Erfindung ist demzufolge ein Verfahren zur elektrochemischen Polymerisation von Pyrrolen oder Mischungen von Pyrrolen mit Comonomeren durch anodische Oxidation der in einem Elektrolyt-Lösungsmittel gelösten oder dispergierten Monomeren in Gegenwart von Leitsalzen unter Abscheidung der Pyrrol-Polymeren an der flächenförmig ausgebildeten Anode, welches dadurch gekennzeichnet ist, daß die Anode aus einem mit der Elektrolyt-Lösung tränkbaren und von dieser durchdringbaren, elektrisch nicht leitenden porösen Trägermaterial in Form eines Flächenelementes besteht, das über mindestens einen elektrisch leitenden Halte- und Kontaktstreifen mit der Stromzuleitung für die Anode leitend verbunden ist.

Gegenstand der Erfindung ist weiterhin eine Anode für den Einsatz bei der elektrochemischen Polymerisation von Pyrrolen oder Mischungen von Pyrrolen mit Comonomeren, bestehend aus einem von einer pyrrolhaltigen Elektrolyt-Lösung getränkten und elektrisch nicht leitenden porösen Trägermaterial in Form eines Flächenelementes und mindestens einem elektrisch leitenden Halte- und Kontaktstreifen, über welchen das nicht leitende Flächenelement mit der Stromzuleitung für die Anode verbindbar ist.

Gegenstand der Erfindung sind ferner Pyrrol-Polymere in innigem Verbund mit einem elektrisch nicht leitenden porösen Trägermaterial, in Form eines Flächenelementes wobei die Pyrrol-

Polymeren mindestens teilweise in dem Trägermaterial eingelagert sind und/oder es durchdringen, erhältlich nach dem erfindungsgemäßen Verfahren.

Es hat sich überraschenderweise gezeigt, daß bei der elektrochemischen Polymerisation von Pyrrolen oder Pyrrol-Comonomer-Mischungen zur Herstellung von flächenförmig ausgebildeten Pyrrol-Polymeren die flächenförmige Anode nicht aus einem elektrisch leitenden Material bestehen muß, sondern daß es hinreicht, wenn ein elektrisch nicht leitendes poröses Trägermaterial mit mindestens einem elektrisch leitenden Halte- und Kontaktstreifen versehen ist, der mit der Stromzufuhr für die Anode verbunden ist. Dennoch wird eine Polymer-Bildung über die ganze Fläche der Anode erzielt, wobei die Polymeren zumindest teilweise in das Trägermaterial der Anode eingelagert werden und dieses durchdringen. Hierbei fängt die Polymer-Abscheidung auf bzw. in dem Anodenmaterial an dem elektrisch leitenden Halte- und Kontaktstreifen an und wächst — in Abhängigkeit von der Dauer der Elektrolyse — über die gesamte Anodefläche vor, bis letztlich eine einheitliche und geschlossene Oberfläche aus dem Pyrrol-Polymeren gebildet ist und dann bei Fortführung der Elektrolyse die Dicke der auf dem Anodenmaterial erzeugten Polypyrrol-Schicht erhöht werden kann.

Als poröses Trägermaterial für die Anode eignen sich erfindungsgemäß Flächenelemente aus elektrisch nicht leitenden Materialien, wie beispielsweise Cellulose, Cellulose-Derivaten, natürlichen und/oder synthetischen Fasern und/oder Fäden, Kunststoffen, anorganischen Materialien, wie Glas oder Ton, etc. Das Anodenmaterial soll dabei keine geschlossene Oberfläche und Struktur aufweisen, sondern von dem bei der elektrochemischen Polymerisation verwendeten Elektrolyten durchdrungen werden können d. h. as soll mit diesem Elektrolyten tränkbar sein. Als flächige Trägermaterialien kommer daher poröse Materialien, wie beispielsweise Gewebe, Gewirke, Fadengelege, Geflechte, Netze, Vliese, Filze, offenzellige Schaumstoffe oder sonstige porenhaltigen Trägermaterialien mit poröser bzw. nicht geschlossener Struktur aus den elektrisch nicht leitenden Materialien in Betracht. Hierzu gehören u. a. Gewebe, Gewirke, Fadengelege, Geflechte oder Netze aus natürlichen und/oder synthetischen Fasern und/oder Fäden, Faservliese, Faserfilze, Textilverbundstoffe, wie Vliesstoffe oder Filze, nicht geleimte Papiere und Pappen, Filterpapiere, Vliespapiere etc. Die Fasern und/oder Fäden können dabei aus Cellulose, Cellulosederivaten, Jute, Hanf, Baumwolle, Seide, Polyamiden, Polyestern, Polyethylen, Polypropylen, Polyvinylchlorid, Polyacrylnitril, aber auch aus anorganischen Stoffen, wie z. B. Glas, bestehen. Ferner kommen als Trägermaterial beispielsweise Formkörper aus offenzelligen Schaumstoffen oder anderen porösen Materialien, wie z. B. Ton etc. in Betracht. Als Beispiele hierfür seien genannt Filme und Folien aus offenzelligen geschäumten Kunststoffen, wie z. B. Polystyrol, Polyethylen, Polyvinylchlorid, Polyurethanen oder Melaminformaldehyd-Harzen. In den erfindungsgemäß als Trägermaterial einzusetzenden Geweben, Gewirken, Fadengelegen, Geflechten, Netzen, Vliesen oder Filzen werden die fadenfreie Fläche, d. h. der nicht durch Fäden oder Fasern abgedeckte Anteil der Gesamtfläche dieser Gebilde, sowie die Größe der Öffnungen hierin, bei den anderen porösen Trägermaterialien und den offenzelligen Schaumstoffen das Porenvolumen, im allgemeinen relativ gering gehalten, wenn ein möglichst gleichmäßiger Aufbau der resultierenden Pyrrolpolymeren, die diese Trägermaterialien eingelagert enthalten und die diese Trägermaterialien durchdringen, angestrebt wird.

Die Form der erfindungsgemäß als Anode einzusetzenden Flächenelemente kann zwar grundsätzlich beliebig sein, vorzugsweise kommen jedoch viereckige Flächenelemente mit mindestens zwei parallelen Seiten, insbesondere rechteckige oder quadratische Flächenelemente, zur Anwendung. An diesen elektrisch nicht leitenden Flächenelementen befinden sich mindestens ein, vorzugsweise jedoch 2 Halte- und Kontaktstreifen, die mit diesem Flächenelement, fest, vorzugsweise aber lösbar verbunden sind. Die Verbindung der Halte- und Kontaktstreifen zu den elektrisch nicht leitenden Flächenelementen kann beispielsweise mittels üblicher Klemm- oder Einspannelemente erfolgen. Die Halte- und Kontaktstreifen bestehen dabei aus einem elektrisch leitfähigen Material, insbesondere Metallen, wobei sich hierfür Edelstähle, Titan, Nickel oder auch Edelmetalle, wie Palladium und insbesondere Platin, besonders bewährt haben.

Die Länge der Halte- und Kontaktstreifen kann in weiten Grenzen variiert werden. Da hierdurch jedoch auch Gestalt und Form der Abscheidung der Pyrrol-Polymeren mitbestimmt wird, soll die Länge der Halte- und Kontaktstreifen im Verhältnis zum Umfang der elektrisch nicht leitenden Flächenelemente nicht zu gering gewählt werden. Werden als Anode die bevorzugten viereckigen Flächenelemente verwendet, so hat es sich als vorteilhaft erwiesen, wenn die Länge der Halte- und Kontaktstreifen der Seitenlänge des elektrisch nicht leitenden Flächenelementes entspricht, an der sie angebracht sind. Bevorzugt sind solche Anoden, die aus viereckigen, insbesondere rechteckigen oder quadratischen, elektrisch nicht leitenden Flächenelementen bestehen, an denen zwei Halte- und Kontaktstreifen an sich gegenüberliegenden Seiten der Flächenelemente befestigt sind. Sind an den elektrisch nicht leitenden Flächenelementen zwei Halte- und Kontaktstreifen angebracht, so hat es sich als zweckmäßig erwiesen, wenn der Abstand zwischen diesen im Bereich von 0,1 bis ca. 10 cm liegt.

Die Halte- und Kontaktstreifen weisen darüber hinaus einen Anschluß auf, über den sie mit der Stromzuleitung für die Anode verbunden werden können. Hierbei kann es sich um übliche Klemm-, Steck- oder Schraubanschlüsse handeln.

Die erfindungsgemäße Anode mit dem elektrisch nicht leitenden Flächenelement und dem oder den Halte- und Kontaktstreifen eignet sich hervorragend für den Einsatz bei der elektrochemischen Polymerisation von Pyrrolen oder Mischungen von Pyrrolen mit Comonomeren.

Unter Pyrrolen werden dabei im Rahmen dieser Verbindung Pyrrol selbst sowie auch die substituierten Pyrrole, wie N-Alkylpyrrole, N-Arylpyrrole, die an den C-Atomen monoalkyl- oder dialkylsubstituierten Pyrrole oder auch die an den C-Atomen monohalogen- oder dihalogensubstituierten Pyrrole verstanden. Bevorzugter Vertreter aus der Klasse der Pyrrole ist das unsubstituierte Pyrrol selbst. Von den substituierten Pyrrolen sind die an den C-Atomen monoalkyl-, dialkyl-, monohalogen- oder dihalogensubstituierten Pyrrole bevorzugt, wie beispielsweise 3,4-Dichlorpyrrol und die 3,4-Dialkylpyrrole mit 1 bis 4 C-Atomen im Alkylrest, wie 3,4-Dimethylpyrrol und 3,4-Diethylpyrrol.

Als Comonomere, die in dem erfindungsgemäßen Verfahren in Mischung mit den Pyrrolen eingesetzt werden können, eignen sich z. B. andere heterocyclische Fünf- oder Sechs-Ringverbindungen, wie z. B. Imidazol, Thiazol, sowie vorzugsweise Furan oder Thiophen. Ferner kommen als Verbindungen, die mit den Pyrrolen copolymerisieren, z. B. Cyclopentadien, Azulen und dessen Derivaten, wie Benzazulen, Kajaazulen, ferner Fulven, Inden oder auch Quadratsäure in Betracht. Auch 2-Bromthiophen, 2,6-Dimethylpyridin und Pyrazin können als Comonomere verwendet werden. Als aromatische Comonomeren sind vor allem die linear kondensierten, mehrkernigen Aromaten, wie Anthracen, Tetracen, Pentacen etc., zu nennen. Bezogen auf 10 Teile der Pyrrole, können die Mischungen aus Pyrrolen und Comonomeren 0,1 bis 10 Teile der Comonomeren enthalten.

Bevorzugt wird in dem erfindungsgemäßen Verfahren als Monomeres das unsubstituierte Pyrrol selbst oder Mischungen des unsubstituierten Pyrrols mit anderen Pyrrolen und/oder den anderen genannten Comonomeren eingesetzt, wobei in den Mischungen mit den anderen Pyrrolen und/oder Comonomeren der Anteil des unsubstituierten Pyrrols vorzugsweise 75 bis 99 Gew.-%, bezogen auf die Monomer-Mischung, beträgt.

Unter Pyrrol-Polymeren werden dementsprechend im Rahmen dieser Erfindung Homopolymere als auch Copolymere der Pyrrole, insbesondere Homopolymere sowie Copolymere des unsubstituierten Pyrrols selbst, verstanden.

Die elektrochemische Polymerisation der Pyrrole bzw. der Mischungen der Pyrrole mit den Comonomeren erfolgt in einem Elektrolyt-Lösungsmittel, in dem die Monomeren gelöst oder dispergiert sind. Als Elektrolyt-Lösungsmittel können die für die elektrochemische Polymerisation von Pyrrolen üblichen und bekannten polaren organischen Lösungsmittel verwendet werden, wie z. B. Alkohole, Ether, wie Dioxan oder auch Tetrahydrofuran, Aceton oder Acetonitril, Dimethylformamid, N-Methylpyrrolidon, Dimethylsulfoxid oder Sulfolan. Verwendet man mit Wasser mischbare organische Lösungsmittel, so können zur Erhöhung der elektrischen Leitfähigkeit auch geringe Mengen an Wasser, beispielsweise bis zu 10 Gew.-%, bezogen auf das Elektrolyt-Lösungsmittel, zugesetzt werden. Bei Mitverwendung von Dispergiermitteln, insbesondere nichtionischen Emulgatoren oder anionischen Seifen, oder auch bei Einsatz von aromatischen Sulfonsäuren bzw. deren Salzen als Leitsalzen ist es auch möglich, die elektrochemische Polymerisation in überwiegend aus Wasser bestehenden Elektrolyt-Lösungsmitteln, insbesondere unter Einsatz von Wasser selber als Elektrolyt-Lösungsmittel, durchzuführen, wie es beispielsweise in den älteren Patentanmeldungen DE-A-33 18 856 und DE-A-33 18 857 beschrieben ist.

Die Monomer-Konzentration wird bei der elektrochemischen Polymerisation der Pyrrole bzw. der Mischungen von Pyrrolen mit Comonomeren im allgemeinen im Bereich von 0,001 bis 5 Mol, vorzugsweise von 0,01 bis 1 Mol, Monomere pro Liter Elektrolyt-Lösungsmittel gehalten, kann jedoch auch unterhalb oder oberhalb dieser Grenzen liegen.

Zur Durchführung des erfindungsgemäßen Verfahrens enthält das Elektrolyt-Lösungsmittel auch ein Leitsalz, das insbesondere dem Stromtransport während der elektrochemischen Polymerisation in dem Elektrolyt-Lösungsmittel dient, das aber auch — zumindest teilweise — in den erhaltenen Pyrrol-Polymeren eingelagert ist und die Eigenschaften dieser Polymeren mitbeeinflußt. Als Leitsalze kommen dabei alle hierfür üblichen und bekannten ionischen oder ionisierbaren Verbindungen in Betracht, die in dem Elektrolyt-Lösungsmittel löslich sind und bei denen das Abscheidungspotential des Anions über etwa 0,8 bis 1 Volt, gemessen gegenüber der Standard-Kalomel-Elektrode, liegt. Die Leitsalz-Konzentration beträgt in dem erfindungsgemäßen Verfahren im allgemeinen 0,001 bis 1 Mol, vorzugsweise 0,01 bis 0,5 Mol, Leitsalz pro Liter Elektrolyt-Lösungsmittel. Die Leitsalze enthalten als Kationen neben $H^+$ insbesondere die Alkalimetall-Kationen, vorzugsweise $Li^+$, $Na^+$ oder $K^+$, oder tertiäre oder quaternäre Onium-Kationen, vor allem des Stickstoffs und des Phosphors. Die tertiären oder quaternären Ammonium- oder Phosphonium-Kationen können niedere Alkylreste, cycloaliphatische Reste oder aromatische Reste enthalten, wobei die tertiären und quaternären Ammonium- oder Phosphonium-Kationen neben den Alkalimetall-Kationen bevorzugt sind. Als Anionen für das Leitsalz haben sich das Tetrafluoroborat-, Tetrafluoroarsenat-, Hexafluoroarsenat-, Hexafluoroantimonat-, Hexachloroantimonat-, Hexafluorophosphat-, Perchlorat-, Hydrogensulfat- und Sulfat-Anion als besonders vorteilhaft erwiesen. Besonders günstig sind auch Leitsalze, die Anionen aromatischer Sulfonsäuren, beispielsweise das Benzolsulfonsäure-Anion, das Toluolsulfonsäure-Anion oder auch anionische, polymere aromatische Sulfonsäureverbindungen, wie das Polystyrylsulfonsäure-Anion, enthalten. Weitere Leitsalze mit Anionen von aromatischen Sulfonsäuren sind beispielsweise in der DE-A-33 18 857 beschrieben. Auch Salze von aliphatischen oder aromatischen Carbonsäuren, beispielsweise Essigsäure, Propionsäure oder Benzoesäure, sind als Leitsalze in dem erfindungsgemäßen Verfahren geeignet. Die Leitsalze werden in dem erfindungsgemäßen Verfahren in allgemeinen in einer Menge zwischen 10 und 40 Mol.%, bezogen auf 1 Mol der zu polymerisierenden Monomeren, eingesetzt. Die Leitsalze können allein oder auch in Mischung miteinander verwendet werden.

Das erfindungsgemäße Verfahren kann in den üblichen und an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, zwei Elektroden und einer externen Stromquelle. Als Anode dienen dabei die weiter oben beschriebenen, elektrisch nicht leitenden Flächenelemente mit mindestens einem elektrisch leitenden Halte- und Kontaktstreifen. Die Kathode kann aus einem üblichen, inerten Elektrodenmaterial, wie beispielsweise Graphit, sein und besteht insbesondere aus Edelstahl, Nickel, Titan oder Edelmetallen, wie Platin oder Palladium. Vorzugsweise ist auch die Kathode flächig ausgebildet und sind die Flächen der Kathode und Anode parallel zueinander angeordnet.

Außer den erwähnten einfachen elektrolytischen Zellen ohne Diaphragma können auch andere Elektrolyseeinrichtungen für das erfindungsgemäße Verfahren Einsatz finden, beispielsweise Zellen mit Diaphragmen oder solche mit Referenzelektroden zur exakten Potentialbestimmung. Häufig ist eine Messung der Strommenge (A sec) zweckmäßig.

Normalerweise wird das erfindungsgemäße Verfahren bei Raumtemperatur durchgeführt. Da sich die Reaktionstemperatur bei dem erfindungsgemäßen Verfahren jedoch als unkritisch erwiesen hat, kann sie allerdings in einem breiten Bereich variiert werden, so lange die Erstarrungstemperatur bzw. Siedetemperatur des Elektrolyt-Lösungsmittels nicht unter- bzw. überschritten wird. Im allgemeinen hat sich eine Polymerisationstemperatur im Bereich von 0 bis 50 °C, insbesondere von + 10 bis + 30 °C als sehr vorteilhaft erwiesen.

Als Stromquellen für den Betrieb der elektrolytischen Zelle, in der das erfindungsgemäße Verfahren durchgeführt wird, eignet sich jede Gleichstromquelle, wie z. B. eine Batterie, die eine hinreichend hohe elektrische Spannung liefert. Üblicherweise wird die erfindungsgemäße elektrochemische Polymerisation mit einer Spannung im Bereich von 0,1 bis 100 Volt, vorzugsweise im Bereich von 1,5 bis 25 Volt, betrieben. Für die Stromdichte haben sich Werte im Bereich von 0,05 bis 20 mA/cm², vorzugsweise im Bereich von 1 bis 10 mA/cm², als günstig und vorteilhaft erwiesen.

Die Dauer der Elektrolyse hängt u. a. von dem verwendeten Elektrolyt-System und den jeweiligen Elektrolysebedingungen ab, sie wird insbesondere aber auch maßgeblich von der Art des gewünschten Endproduktes mitbestimmt und kann daher in weiten Grenzen schwanken. Wie bereits erwähnt, setzt in dem erfindungsgemäßen Verfahren die Bildung der Pyrrol-Polymere auf dem flächigen Anodelement an den Halte- und Kontaktstreifen ein, wobei im Laufe der Elektrolyse sich die Polymerbildung über die gesamte Anodenfläche ausdehnt. Weiterhin findet zunächst die Polymerbildung, zumindest vornehmlich, in dem elektrisch nicht leitenden Flächenelement der Anode statt, und erst anschließend wächst der Polymerfilm in die Dicke, d. h. lagern sich die Pyrrol-Polymeren auf dem flächigen Anodenmaterial ab.

Je nach Dauer des Verfahrens können demzufolge mit dem erfindungsgemäßen Verfahren unterschiedliche Endprodukte erhalten werden. Geht man beispielsweise von einem flächigen Anodenmaterial mit 2, an zwei gegenüberliegenden Seiten des Flächenelementes angebrachten Halte- und Kontaktstreifen aus, so wachsen die Pyrrol-Polymeren gleichmäßig von diesen Rändern zur Mitte des Flächenelementes hin. Bricht man die Elektrolyse nach kurzer Dauer zu einem Zeitpunkt ab, zu dem die Polymer-Ablagerungen auf bzw. in der Anode noch nicht zusammengewachsen sind, so resultiert ein flächiges Produkt, mit zwei elektrisch leitenden Seitenstreifen und einem elektrisch nicht leitenden, isolierenden Mittelstreifen. In den Seitenbereichen ist dabei das flächenförmige Anodenmaterial von den Pyrrol-Polymeren durchdrungen und kann quasi als Trägermaterial hierfür angesehen werden. Obwohl noch keine geschlossene und durchgehende Oberfläche der Pyrrol-Polymeren ausgebildet ist und das Trägermaterial teilweise auch noch oberflächlich sichtbar ist, zeigen diese Seitenstreifen bereits die hohe elektrische Leitfähigkeit der üblichen Polypyrrol-Filme im Bereich von $10^0$ bis $10^2$ ohm$^{-1}$ cm$^{-1}$.

Wird die Elektrolyse länger fortgeführt, so wachsen die Pyrrol-Polymeren von den beiden Halte- und Kontaktstreifen her schließlich in der Mitte zusammen und durchdringen gleichmäßig die gesamte Fläche des als Anode eingesetzten elektrisch nicht leitenden Flächenelementes. Wird die Elektrolyse in diesem Zeitpunkt abgebrochen, so resultiert ein Produkt, welches in dem als Anode eingesetzten porösen Flächenelement mit Gewebe-, Netz-, Vlies-, Poren-, Zellen- oder sonstiger offener Struktur die Pyrrol-Polymeren eingelagert enthält. Das Verfahren kann dabei so gesteuert werden, daß noch keine geschlossene, einheitliche Oberfläche der Pyrrol-Polymeren gebildet ist. Bei einem solchen Produkt werden die mechanischen und größtenteils auch die chemischen Eigenschaften weitgehend von dem Trägermaterial des elektrisch nicht leitenden Flächenelementes bestimmt, welches jedoch nunmehr eine hohe elektrische Leitfähigkeit besitzt. Nach dieser Verfahrensvariante lassen sich somit die elektrischen Eigenschaften der als Anodenmaterial eingesetzten elektrisch nicht leitenden Flächenelemente variieren.

Wird schließlich die Elektrolyse noch weiter geführt, so bildet sich auf dem als Anode eingesetzten Flächenelement eine durchgehende, geschlossene Filmoberfläche aus den Pyrrol-Polymeren, wobei die Dicke dieser Filmschicht von der Länge der Elektrolysedauer abhängt. In diesem Fall erhält man Filme aus Pyrrol-Polymeren, die sozusagen als Stütz- und Trägermatrial das als Anode eingesetzte elektrisch nicht leitende Flächenelement eingelagert enthalten. Das eingelagerte Stütz- und Trägermaterial verleiht den Filmen aus den Pyrrol-Polymeren beispielsweise eine erhöhte mechanische Festigkeit oder Elastizität.

Die nach dem erfindungsgemäßen Verfahren erhaltenen Produkte werden nach Beendigung der Elektrolyse zur Entfernung von anhaftendem Leitsalz mit Lösungsmitteln, vorzugsweise Wasser oder wäßrigen Lösungsmitteln, gewaschen und bei Temperaturen im Bereich von 25 bis 150 °C, vorzugsweise unter Vakuum getrocknet.

Das erfindungsgemäße Verfahren zeichnet sich durch eine große Variationsbreite aus und erlaubt in einfacher und reproduzierbarer Weise die Herstellung von sehr verschiedenartigen Pyrrol-Polymer-Produkten mit hohen elektrischen Leitfähigkeiten, im allgemeinen über $10^{-2}$ Ohm$^{-1}$ cm$^{-1}$, insbesondere über $10^0$ Ohm$^{-1}$ cm$^{-1}$. Die elektrische Leitfähigkeit wird nach der Zweipunkt- oder Vierpunkt-Methode gemessen. Die nach dem erfindungsgemäßen Verfahren erhaltenen Produkte haben sehr gute anwendungstechnische Eigenschaften. Sie zeigen gegenüber den bisher bekannten Filmen aus Pyrrol-Polymeren vielfach verbesserte bzw. modifizierte Eigenschaften, die sie für ein breites Spektrum von Anwendungsgebieten geeignet machen. Bevorzugt werden die erfindungsgemäßen Produkte bei der Herstellung von elektrischen Schaltern, Halbleiter-Bauteilen, Elektroden, elektrochemischen Speicherelementen und Abschirmmaterialien eingesetzt.

Die Erfindung wird durch die nachfolgenden Beispiele näher erläutert. Die in den Beispielen genannten Teile und Prozente beziehen sich, sofern nicht anders angegeben, auf das Gewicht.

Beispiel 1

Es wurde in einer Durchflußelektrolysezelle (Inhalt 100 ml) gearbeitet. Als Kathode diente ein rechteckiges Platinblech mit einer Oberfläche von 10 cm². Als Anode diente ein rechteckiges Filterpapier gleicher Oberfläche, an dessen zwei gegenüberliegenden Seiten mittels einer Klemmvorrichtung je ein Halte- und Kontaktstreifen aus Platin befestigt war. Die Halte- und Kontaktstreifen waren mit der Stromzuleitung zu der externen Stromquelle (Batterie) verbunden. Der Abstand der parallel zueinander angeordneten Elektroden betrug 6 cm. Als Elektrolyt dient eine Lösung von 7,54 g Pyrrol und 12,94 g Tri-(n-butyl) ammoniumbenzolsulfonat in 1 600 ml Acetonitril. Der Elektrolyt wurde mit einem Durchsatz von ca. 30 l pro Stunde durch die Elektrolysezelle gepumpt und die Elektrolyse bei Raumtemperatur mit eine Spannung von 20 Volt und einer Stromdichte von 5,76 mA/cm² durchgeführt. Nach 30-minütiger Dauer wurde die Elektrolyse unterbrochen. Das Filterpapier war mit Polypyrrol durchwachsen und hatte eine Leitfähigkeit von 45 Ohm$^{-1}$ cm$^{-1}$. Nach vierstündiger Lagerung wurde keine Änderung der Leitfähigkeit beobachtet.

Beispiele 2 bis 8

Es wurde gemäß Beispiel 1 gearbeitet, diesmal jedoch als Anode ein entsprechendes Flächenelement aus (2) einem Glasgewebe, einem Gewebe aus (3) Cellulosefasern, (4) Hanf, (5) Seide, (6) Polyacrylnitril, (7) einem Vlies aus Polyethylen-Kurzfasern und (8) aus einem offenzelligen Polystyrol-Schaumstoff eingesetzt. Es wurden in allen Fällen vergleichbare Produkte wie in Beispiel 1 erhalten.

**Patentansprüche**

1. Verfahren zur elektrochemischen Polymerisation von Pyrrolen oder Mischungen von Pyrrolen mit Comonomeren durch anodische Oxidation der in einen Elektrolyt-Lösungsmittel gelösten oder dispergierten Monomeren in Gegenwart von Leitsalzen unter Abscheidung der Pyrrol-Polymeren an der flächenförmig ausgebildeten Anode, dadurch gekennzeichnet, daß die Anode aus einem mit der Elektrolyt-Lösung tränkbaren, elektrisch nicht leitenden porösen Trägermaterial in Form eines Flächenelementes besteht, das über mindestens einen elektrisch leitenden Halte- und Kontaktstreifen mit der Stromzuleitung für die Anode leitend verbunden ist.

2. Verfahren nach Anspruch 1, dadurch gekennzeichnet, daß die Anode aus einem viereckigen porösen Flächenelement mit mindestens zwei parallelen Seiten gebildet wird.

3. Verfahren nach einem der Ansprüche 1 oder 2, dadurch gekennzeichnet, daß an dem elektrisch nicht leitenden porösen Flächenelement zwei sich gegenüberliegende Halte- und Kontaktstreifen angebracht sind.

4. Verfahren nach einem der Ansprüche 1 bis 3, dadurch gekennzeichnet, daß es sich bei dem elektrisch nicht leitenden porösen Flächenelement um ein Gewebe, Gewirke, Fadengelege, Geflecht, Netz, Faservlies, einen Vliesstoff, Faserfilz, Filz oder offenzelligen Schaumstoff handelt.

5. Verfahren nach einem der Ansprüche 1 bis 4, dadurch gekennzeichnet, daß das elektrisch nicht leitende poröse Flächenelement aus Cellulose, Cellulosederivaten, natürlichen und/oder synthetischen Fasern und/oder Fäden, Kunststoffen oder anorganischen Materialien, wie insbesondere Glas, besteht.

6. Verfahren nach einem der Ansprüche 1 bis 5, dadurch gekennzeichnet, daß die elektrochemi-

sche Polymerisation mit einer Spannung im Bereich von 1 bis 100 Volt und einer Stromdichte im Bereich von 0,05 bis 20 mA/cm² betrieben wird.

7. Anode für den Einsatz bei der elektrochemischen Polymerisation von Pyrrolen oder Mischungen von Pyrrolen mit Comonomeren, bestehend aus einem von einer pyrrolhaltigen Elektrolyt-Lösung getränkten, elektrisch nicht leitenden porösen Trägermaterial in Form eines Flächenelementes und mindestens einem elektrisch leitenden Halte- und Kontaktstreifen, der über das Flächenelement mit der Stromzuleitung für die Anode verbindar ist.

8. Anode gemäß Anspruch 7, dadurch gekennzeichnet, daß das Flächenelement viereckig mit mindestens zwei parallelen Seiten ausgebildet ist.

9. Anode nach einem der Ansprüche 7 oder 8, dadurch gekennzeichnet, daß an dem Flächenelement zwei sich gegenüberliegende Halte- und Kontaktstreifen angebracht sind.

10. Pyrrol-Polymere in innigem Verbund mit einem elektrisch nicht leitenden porösen Trägermaterial in Form eines Flächenelementes, wobei die Pyrrol-Polymeren mindestens teilweise in dem Trägermaterial eingelagert sind und/oder dieses durchdringen, erhältlich nach einem Verfahren gemäß Ansprüchen 1 bis 6.

### Claims

1. A process for the electrochemical polymerization of a pyrrole or a mixture of a pyrrole with a comonomer by anodic oxidation of the monomers in solution or dispersion in an electrolyte solvent, in the presence of a conductive salt, with deposition of the pyrrole polymer on the sheet-like anode, wherein the anode consists of an electrically non-conductive, porous substrate which can be impregnated with the electrolyte solution and is in the form of a sheet-like element which is connected electrically to the current supply for the anode *via* at least one electrically conducting support and contact strip.

2. A process as claimed in claim 1, wherein the anode consists of a quadrilateral, porous, sheet-like element having at least two parallel sides.

3. A process as claimed in claim 1 or 2, wherein two support and contact strips are mounted opposite one another on the electrically non-conductive, porous, sheet-like element.

4. A process as claimed in any of claims 1 to 3, wherein the electrically non-conductive, porous, sheet-like element is a woven fabric, a knitted fabric, a laid web, a braided material, a net, a nonwoven fibrous material, a fleece, a fiber mat, a felt or an open-cell foam.

5. A process as claimed in any of claims 1 to 4, wherein the electrically non-conductive, porous, sheet-like element consists of cellulose, a cellulose derivative, natural and/or synthetic fibers and/or filaments, a plastic or an inorganic material, in particular glass.

6. A process as claimed in any of claims 1 to 5, wherein the electrochemical polymerization is carried out using a voltage of from 1 to 100 volts and a current density of from 0.05 to 20 mA/cm².

7. An anode for use in the electrochemical polymerization of pyrroles or mixtures of pyrroles with comonomers, consisting of an electrically non-conductive, porous substrate which is impregnated with a pyrrole-containing electrolyte solution and is in the form of a sheet-like element, and of at least one electrically conducting support and contact strip which can be connected to the current supply for the anode *via* the sheet-like element.

8. An anode as claimed in claim 7, wherein the sheet-like element is quadrilateral and has at least two parallel sides.

9. An anode as claimed in claim 7 or 8, wherein two support and contact strips are mounted opposite one another on the sheet-like element.

10. A pyrrole polymer intimately bonded to an electrically non-conductive, porous substrate in the form of a sheet-like element, some or all of the polymer being embedded in the substrate and/or penetrating the latter, and obtainable by a process as claimed in claims 1 to 6.

### Revendications

1. Procédé pour la polymérisation électrochimique des pyrroles ou de mélanges de pyrroles avec des comonomères par oxydation anodique de monomères dissous ou en dispersion dans une solution d'électrolyte en présence de sels conducteurs par séparation des polymères de pyrrole à l'anode conçue en forme de plaque, caractérisé en ce que l'anode est constituée d'un matériau support poreux ne conduisant par l'électricité, immergé dans une solution d'électrolyte, sous la forme d'un élément plat, qui est relié par au moins une barre de maintien et de contact conductrice de l'électricité au conducteur d'alimentation du courant à l'anode.

2. Procédé selon la revendication 1, caractérisé en ce que l'anode est formée en un élément plat poreux quadrangulaire avec au moins deux côtés parallèles.

3. Procédé selon la revendication 1 ou 2, caractérisé en ce que deux barres de maintien et de contact se superposant sont disposées sur l'élément plat poreux ne conduisant pas l'électricité.

4. Procédé selon l'une des revendications 1 à 3, caractérisé en ce que, en ce qui concerne l'élément plat poreux ne conduisant pas l'électricité, il s'agit d'un tissu, d'un tissu à maille, d'un canevas, d'un treillis, d'une résille, d'un non-tissé, d'une étoffe de nappe de fibres, de feutre en fibres, d'un feutre ou d'une mousse à cellules ouvertes.

5. Procédé selon l'une des revendications 1 à 4, caractérisé en ce que l'élément plat poreux ne conduisant pas l'électricité est constitué de cellulose, de dérivés cellulosiques, de fibres et/ou de fils naturels et/ou synthétiques, de matière plastique ou de matériaux minéraux, tels que par exemple le verre.

6. Procédé selon l'une des revendications 1 à 5, caractérisé en ce que la polymérisation électrochimique est mise en œuvre sous une tension dans la plage de 1 à 100 Volts et avec une densité de courant dans la plage de 0,05 à 20 mA/cm².

7. Anode destinée à être utilisée dans la polymérisation électrochimique de pyrroles ou de mélange de pyrroles avec des comonomères, constituée d'un matériau support poreux ne conduisant pas l'électricité, immergé dans une solution d'électrolyte renfermant des pyrroles, sous la forme d'un élément plat et d'au moins une barre de maintien et de contact conduisant l'électricité qui est susceptible de relier l'élément plat avec l'arrivée de courant de l'anode.

8. Anode selon la revendication 7, caractérisée en ce que l'élément plat est quadrangulaire avec au moins deux côtés parallèles.

9. Anode selon la revendication 7 ou 8, caractérisée en ce que sur l'élément plat sont disposées deux barres de maintien et de contact se superposant.

10. Polymère de pyrrole en liaison intime avec un matériau support poreux ne conduisant pas l'électricité sous la forme d'un élément plat, dans lequel les polymères de pyrrole sont insérés au moins en partie dans le matériau support et/ou diffusent dans ce dernier, pouvant être obtenu d'après le procédé selon les revendications 1 à 6.